# EUROPEAN PATENT APPLICATION

(11) **EP 3 428 043 A1**
(43) Date of publication of application: **16.01.2019**
(21) Application number: 18179666.5
(22) Date of filing: 25.06.2018
(51) Int. Cl.: B62D 21/03, B62D 29/00

(54) **ONE-PIECE CROSS-MEMBER FOR CARRIER TRUCK CHASSIS**

(30) Priority: 12.07.2017 TR 201710225
(71) Applicant: Tirsan Treyler Sanayi Ve Ticaret Anonim Sirketi, 54580 Sakarya (TR); Asas Alüminyum Sanayi ve Ticaret Anonim Sirketi, Istanbul (TR)
(72) Inventor: ZORLU, Fatih Zafer, ISTANBUL (TR); AYAN, Sadik Mutlu, ISTANBUL (TR); KUMAS, Ali, 54580 SAKARYA (TR); UYGUL, Birkan, 54580 SAKARYA (TR)
(74) Representative: Yamankaradeniz, Kemal

(57) **Abstract**

The invention is a one-piece cross-member(100), having a main body (10) on which all relevant parts and components are located, used as a supporting element for all carrier vehicle chassis (A), having; a group of connecting holes (20) connecting spring brackets (C) that bind vehicle axes to the chassis (A), a connection surface (21) that fastens the spring brackets (C) to the main body (10) by means of the above mentioned group of connecting holes (20), a seating surface (22) bedding the filling/discharging line that will be fastened to the chassis (A), a supporting structure (23) located at the bottom of the main body (10), supporting the axles which are seated on the spring brackets (C), a reinforcing structure (24) that improves endurance and allows different types of accessories to be mounted on the cross-section (100).

## Description

### TECHNICAL FIELD

The invention is related to a cross-section, generally used as a backbone in a heavy truck chassis, which can be produced as one-piece without a need for mounting and welding steps.

The invention, in particular, is related to a one-piece cross-section which is uniformly manufactured in place of different types of riveted or welded cross-sections used in the chassis of tankers carrying fuel-oil, chemicals and granular products.

### CURRENT STATUS OF THE TECHNIQUE

Today, land transportation is especially important for shipping and transporting industrial products where heavy vehicles are often preferred for land transportation. Heavy vehicles carry heavy loads for long periods of time, and these loads are backed mainly by the vehicle chassis. Therefore, cross-sections and crossovers are used in the vehicle chassis, as support elements in order to show resistance to the load.

Crossovers are aluminum pieces formed by cutting, punching and welding together different parts, providing a rigid connection between the two frame profiles, which acts as a backbone to spring brackets used for mounting axle bars of "O" class trailers with air suspension.

Crossovers are of great importance when considering tankers carrying fuel-oil, chemical and granular products. Depending on the type of carrier vehicle's chassis design, there are crossovers with different designs and manufacturing methods. Production time and costs are inevitable when considering crossovers that are produced specifically for each carrier vehicle chassis. In order to overcome these disadvantages, many studies, researches and developments are carried out on crossovers.

The crossovers produced with the current technique are finalized by welding different parts to each other, riveting or assembling them by means of cap screws. In addition, there are crossovers produced with different designing and manufacturing techniques, which lead to a cost increase.

The main problems encountered with the crossovers produced by means of the current techniques are;
- For the reason that there are crossover profiles with more than one structure, encountering excess stock items, difficulties in production planning and follow-up,
- The risk of cracking in the weld zones,
- The high costs,
- The long duration of production for the reason that the current crossover profiles are formed by assembling many different parts,
- Expensive production costs,
- Difficult serviceability due to its weld bonding to the spring bracket.

A previous application dated 2015/13741 was found while searching patents on former techniques. The abstract page of this application describes a facilitating manufacturing method for a seamless, aluminum bolted, main carrier chassis cross-section for a tilt carrier commercial vehicle, resetting the labor costs and reducing the weight of the vehicle. Aluminum bolted, seamless, main carrier chassis cross-section is made up of an aluminum profile cross-section base, upper aluminum profile, aluminum sheet surface and solid steel rivets.

The cross-section defined in the study dated 2015/13741 consists of multiple parts which in general are riveted to each other and assembled. This makes a problem in terms of both cost and duration of production. That invention can not be produced in one-piece and uniform type.

As a result, improvements are being made to the cross-sections, which necessitates new structures that will overcome the above mentioned disadvantages and bring solutions to current systems.

### PURPOSE OF THE INVENTION

The current invention is related to a cross-section that meets the above-mentioned requirements, removes all disadvantages hence adds some additional advantages.

The main purpose of the invention is to put forward a monoblock, economical and practical product that requires a short production time.

A second purpose of the invention is to eliminate the tension and welding cracks associated with welding because welding process is not needed.

One other purpose of the invention is to provide a monolithic structure that can fulfill the functions of all cross-sections produced with different techniques.

Moreover, it offers an easily serviceable product, produced in a shorter time eliminating the cutting, punching and bending processes.

Since it is produced in a monolithic structure, excessive stock items and production planning become easy to follow up.

Fulfilling all the advantages mentioned above and which will be understood from the following detailed description, the current invention is related to a one-piece cross-section that is used as a support element for a carrier vehicle chassis having a main body where all relevant parts and components are mounted. Above mentioned cross-section consists of;
- a group of connector sockets mounted at the main body corners, connecting the spring brackets that bind vehicle axes to the chassis,
- a connector surface that fastens the spring brackets to the main body by means of the above mentioned connector socket group,
- a seating surface bearing the filling / discharging line that will be connected to the chassis,
- a supporting structure which acts as a backbone for the axles fastened on the spring brackets preventing the impact on the framework on any vibration,
- a reinforcing structure that improves endurance and allows different types of accessories to be mounted on the cross-section.

The structural and characteristic features of the invention and all advantages thereof will be more clearly understood by means of the following figures and detailed description which are given referring to these figures. Therefore, evaluation should be done bearing these shapes and detailed explanation in mind.

### BRIEF DESCRIPTION OF THE FIGURES

In order to best understand the structuring of the current invention and its advantages together with the additional elements, it should be appreciated that the figures described below are to be understood.
Figure 1. The perspective overview of the cross-section complex which is the subject matter of the invention.
Figure 2. The perspective representation of the invented cross-section mounted on the vehicle chassis.
Figure 3. A zoomed detailed view of the cross-section, the subject matter of the invention, mounted on the car chassis and spring bracket.
Figure 4. A three-dimensional general view of the cross-section mounted on a representative vehicle.

### REFERENCE NUMBERS

10: Main Body
20: Group of connector sockets
21: Connector surface
22: Seating surface
23: Supporting structure
24: Reinforcing structure
25: Control line
100: Cross-section
A: Chassis
B: Representative vehicle
C: Spring bracket

### DETAILED DESCRIPTION OF THE INVENTION

In this detailed description, preferred structuring of the invented cross-section (100) are disclosed in order to provide a better understanding of the invention and not to impose any limiting effect.

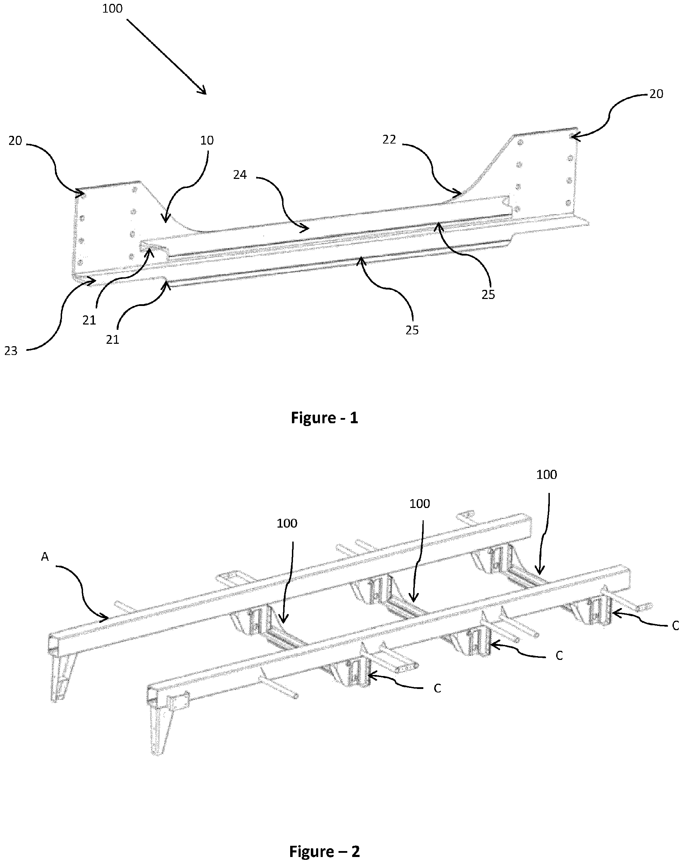

In Figure 1, there is a complete perspective overview of the invented cross-section (100). Figure 2 shows a perspective representation of the invented cross-section (100) mounted on a vehicle chassis (A). Above mentioned cross-section (100) consists of; a group of connector sockets (20) connecting the spring brackets (C) that bind vehicle axes to the chassis (A), a connector surface (21) that fastens the spring brackets (C) to the main body (10) by means of the above mentioned connector socket group (20), a seating surface (22) bearing the filling/discharging line that will be connected to the chassis (A), a supporting structure (23) which acts as a backbone for the axles fastened on the spring brackets (C) preventing the impact of any vibration on the framework, a reinforcing structure (24) that improves endurance and allows different types of accessories to be mounted on the cross-section (100).

The invented cross-section (100) increases the strength of the chassis (A) that mainly carries the load in carrier vehicle groups with a supporting role. Thus, the endurance/strength of the chassis (A) is increasing. The cross-section (100) is mounted horizontally, used in between mutually opposite spring brackets (C). The spring brackets (C) are used to connect the vehicle axles to the chassis (A). Therefore, the cross-sections (100) in a way will also carry vehicle axles.

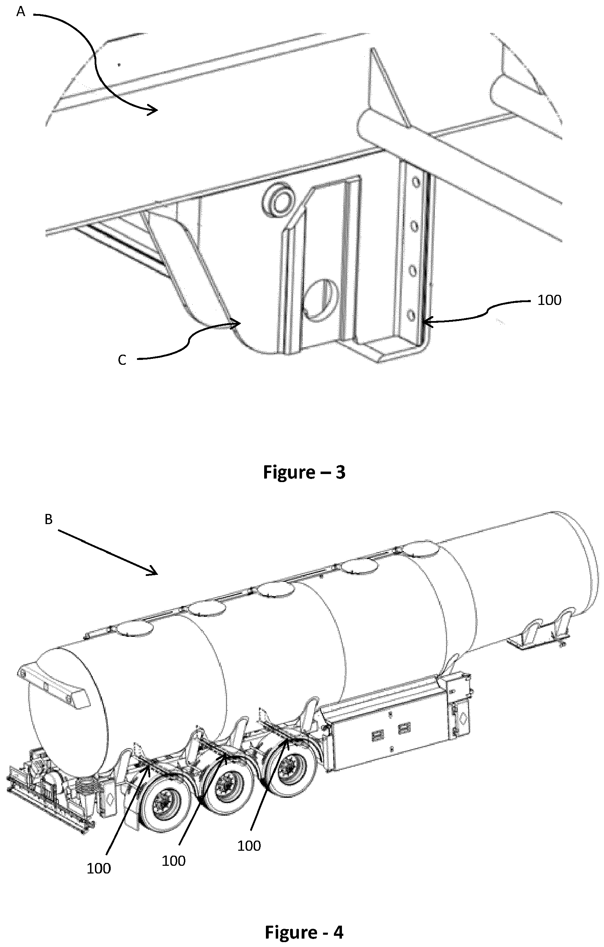

Figure 3 shows a zoomed, detailed view of the invented cross-section (100) mounted on the vehicle chassis (A) and the spring bracket (C). The spring bracket (C) is fastened to the main body (10) corners of the cross-section (100) and a group of connector sockets (20) by means of bolts. There is also a connector surface (21) which helps to fasten the spring bracket (C) to the main body (10) by means of the mentioned group of connector sockets (20), so that the main body (10) and the cross-section (100) are all located between the spring brackets (C). There is also a supporting structure (23) under the main body (10), seated on the spring bracket (C) which acts as a supporting body for the axles and which prevents any impact of any vibration on the framework.

Figure 4 shows a three-dimensional overview of the invented cross-section (100) mounted on the representative vehicle (B). There is a filling / discharging line seated on the chassis (A) and these lines are mounted on the cross-section (100). Thus, on the region where the filling / discharging lines and the cross-section (100) are in contact; there is a seating surface (22) bedding the filling/discharging line and which is formed upon the discharging process from the upper surface of the main body (10). There is a reinforcing structure (24) positioned on the main body (10) surface to increase the endurance of the cross-section (100) against bending, torsion and detachment and to allow for the bolted mounting of different types of accessories on the cross-section (100) and is designed parallel to the direction of the extrusion and with the appropriate thickness. On mentioned reinforcing structure (24), control lines (25) have been designed and identified by an extrusion process, in order to determine the location of the connection holes which are opened in order to mount different types of accessories on the cross-section (100).

### The production method of invented cross-section (100) is as follows;

Firstly, the main body (10) is cut in a short form by pressing long blocks by an extrusion press. At both ends of the said main body (10), a group of connector sockets (20) and connector surface (21) are opened in order to mount the bolted connection of the different types of spring brackets (C). In order to identify the filling / discharging line on the upper part of the main body (10), a seating surface (22) is formed by a discharging process on the CNC counter. In order to support the axles which are seated on the spring brackets (C) and to prevent the impact of any vibration on the framework, a supporting structure (23) is formed by a discharging process on the CNC counter to the bottom of the main body (10). A reinforcing structure (24) is then designed and produced parallel to the direction of the extrusion and with the appropriate thickness, in order to increase the endurance of the cross-section (100) against bending, torsion and detachment and to allow for the bolted mounting of different types of accessories on the cross-section (100). In addition,control lines (25) have been identified on the reinforcing structure (24) in order to determine the location of the connection holes which are opened in order to mount different types of accessories on the cross-section (100). The control lines (25) are designed to move out the extrusion process

## Claims

1. The invention is a one-piece cross-section (100), having a main body (10) on which all relevant parts and components are located, used as a supporting element for all carrier vehicle chassis (A), having the following properties;
• a group of connector sockets (20) mounted at the main body (10) corners, connecting the spring brackets (C) that bind vehicle axes to the chassis (A),
• a connector surface (21) that fastens the spring brackets (C) to the main body (10) by means of the above mentioned connector socket group (20),
• a seating surface (22) bedding the filling/discharging line that will be fastened to the chassis (A) and which is formed upon the discharging process from the upper surface of the main body (10),
• a supporting structure (23) located at the bottom of the main body (10), supporting the axles which are seated on the spring brackets (C) and preventing the impact of any vibration on the framework,
• a reinforcing structure (24) that improves endurance and allows different types of accessories to be mounted on the cross-section (100).

2. It is cross-section (100) suitable to Demand 1, including the control line (25) designed on the supporting structure (24) for identifying the locations of the connection holes opened in order to allow different types of accessories to be mounted on the cross-section (100).

3. The production methods for the invented a one-piece cross-section (100), having a main body (10) on which all relevant parts and components are located, used as a supporting element for all carrier vehicle chassis (A), including;
• the main body (10) is produced by extrusion method,
• a group of connector sockets (20) and connector surface (21) are opened in order to mount the bolted connection of the different types of spring brackets (C) at both ends of the said main body (10),
• a seating surface (22) is formed by a discharging process in order to identify the filling / discharging line on the upper part of the main body (10),
• a supporting structure (23) is formed by a discharging process to the bottom of the main body (10) in order to support the axles which are seated on the spring brackets (C) and to prevent the impact of any vibration on the framework,
• a reinforcing structure (24) is designed and produced parallel to the direction of the extrusion and with the appropriate thickness, in order to increase the endurance against bending, torsion and detachment and to allow for the bolted mounting of different types of accessories on the cross-section (100),
• control lines (25) identified on the reinforcing structure (24) in order to determine the location of the connection holes which are opened in order to mount different types of accessories on the cross-section (100)
as the steps in the production process.
